# EUROPEAN PATENT APPLICATION

(11) **EP 2 723 004 A1**
(43) Date of publication of application: **23.04.2014**
(21) Application number: 12741398.7
(22) Date of filing: 18.06.2012
(51) Int. Cl.: H04B 10/00, H04B 10/18

(54) **METHOD FOR NON-LINEAR EQUALIZATION OF THE OPTICAL CHANNEL IN THE FREQUENCY DOMAIN**

(30) Priority: 17.06.2011 PT 10576511
(71) Applicant: Portugal Telecom Inovacao, Sa, 3810-006 Aveiro (PT); Universidade De Aveiro, 3810-193 Aveiro (PT)
(72) Inventor: GOMES FERREIRINHO LIMA RODRIGUEZ, Cláudio Emanuel, 3810-006 Aveiro (PT); MÃO CHEIA, Paulo, 3810-006 Aveiro (PT); PEREIRA, GUIOMAR, Fernando Pedro, 3810-193 Aveiro (PT); MOREIRA NOLASCO PINTO, Armando Humbert, 3810-193 Aveiro (PT); DIAS REIS, Jacklyn, 3810-193 Aveiro (PT); JESUS TEIXEIRA, António Luis, 3810-193 Aveiro (PT)
(74) Representative: Arnaut, José Luis
(86) International application number: PCT/PT2012/000021
(87) International publication number: WO 2012/173505

(57) **Abstract**

This invention relates to a method for non-linear equalization of the optical channel in the frequency domain in long range and high speed optical communication systems, which is based in an inverse Volterra series transfer in order to mitigate signal distortions in the said optical communication systems. It is characterized in that: - the phase and amplitude data are extracted from the received optical signal; - the signal components are digitized in analog-to-digital conversion devices; - the digitized signal feeds a physical unit of digital signal processing.

## Description

### Technical Scope of the Invention

This invention relates to the field of optical communications and discloses a method for equalization of non-linear distortions in long range and high speed optical communication systems, using a Volterra series expansion in the frequency domain which provides an estimate of the inverse transfer function of the optical system.

### Description of the State of the Art

During the last decade, the optical networks have drastically evolved in terms of paradigms and communication technologies. Among a number of emerging technologies, there is a focus in new advanced modulation formats which are associated to coherent detection, with intensive recourse to signal processing both on the optical transmitter and on the receiver. Underlying these innovations is the need for effectively responding to the growing flow of information and service provision on the network, thus overcoming the limitations of the technologies conventionally used to date.

### Advanced Optical Modulation and Coherent Detection

The coherent detection in optical systems has been proposed for the first time in the early 80's, with solutions being developed as regards homodyne and heterodyne detection receivers. At that time, given the absence cf attractive solutions for optical amplification, the main objective of coherent detection was increasing the receiver's sensitivity, which would account for a substantial increase of the transmission distance in optical communication systems. However, although there was a gain in sensitivity of about 20 dB, both solutions were strongly limited by their complexity and high costs.

Later, in the 90's, with the introduction of erbium doped fiber amplifiers (EDFA) and wavelength division multiplexing (WDM) systems, the interest in coherent receivers has fallen for more than ten years. However, during the last decade, two factors of increasing importance have definitely contributed to a revival in the interest for coherent detection. On one hand, in view of the growing need for bandwidth, there is a clear exhaustion of the capacities provided by the current transmission/detection technologies. This problem is essentially caused by the inefficient use of the available spectrum and the low sensitivity of detection in the systems conventionally used for intensity modulation and direct detection (TM/DD). This restricts the growth of traffic in the core, metropolitan and access networks, thus imposing the need for the implementation of new signal transmission and detection technologies. On the other hand, recent developments in the scope of digital signal processing (DSP) have enabled the practical implementation of optical carrier synchronization and recovery techniques, allowing new solutions to be developed as regards the coherent receiver and significantly reducing the complexity and related costs.

While the direct detection only allows the retrieval of the amplitude information of the optical signal, being insensitive to the phase information, the coherent detection will allow both the components of the signal to be retrieved, providing a linear transduction into the electrical domain. This, in fact, makes the coherent detection to be compatible with advanced modulation formats which profit from other degrees of freedom of the optical carrier (phase, polarization) in order to increase the amount of encoded information in each transmitted symbol, thus improving the system's spectral efficiency. Additionally, the retrieval of phase and amplitude information allows a digital copy of the received signal to be obtained, which will potentiate the application of digital equalization techniques to the received samples, so as to compensate for the distortions resulting from the transmission.

In 2008, the coherent detection has been demonstrated for an optical signal which was modulated in a polarization multiplexed quaternary phase-shift keying (PM-QPSK) system at 40 Gb/s [H. Sun, K.-T. Wu, and K. Roberts, "Real-time measurement of a 40-Gb/s coherent system," Optics Express, vol. 16, pp. 753 - 791, 2008]. The most recent records of optical fiber capacity were established by advanced modulation combined with coherent detection. In 2009, a record of spectral efficiency of 6.2 bits/s/Hz was demonstrated with a WDM system of 10 channels, by applying a PM-16QAM signal at 112 Gb/s in a frequency grid of 16.7 GHz [A. H. Gnauck, P. J. Winzer, C. R. Doerr, and L. L. Buhl, "10×112-gb/s PDM 16-QAM Transmission Over 630 km of Fiber with 6.2-b/s/Hz Spectral Efficiency," in Proc. Conf. Optical Fiber Communication 2009]. Also in 2009, a new record of fiber capacity was established in 32 Tb/s, with the transmission of 320 PM-RZ-8QAM channels at 114 Gb/s over 580 km of ultra-low-loss fiber [X. Zhou, J. Yu, M.-F. Hang, Y. Shao, T. Wang, P. Magill, M. Cvijetic, L. Nelson, M. Birk, G. Zhang, S. Ten, H. B. Matthew, and S. K. Mishra, "32tb/s (320×114gb/s) PDM-RX-8QAM Transmission Over 580km of SM-28 Ultra-Low-Loss Fiber," in Proc. Conf. Optical Fiber Communication 2009].

### Digital Post-Compensation of Optical Channel Distortions

### 1.Linear Equalization

The digital compensation of the linear effects from the signal propagation in the fiber is currently accomplishable in the time domain by means of finite impulse response (FIR) filters [E. Ip and J. M. Kahn, "Digital Equalization of Chromatic Dispersion and Polarization Mode Dispersion", IEEE Journal of Lightwave Technology, vol.25, no.8, August 2007] or even of infinite impulse response (IIR) filters [G. Goldfarb and G. Li, "Chromatic Dispersion Compensation Using Digital IIR Filtering With Coherent Detection", IEEE Photonics Technology Letters, vol.19, no.13, July 2007]. Alternatively, the digital equalization of linear effects can also be made in the frequency domain by applying the inverse transfer function of the fiber's linear response, which can be previously known or determined by means of adaptive algorithms [S. J. Savory, "Digital Filters for Coherent Optical Receivers", Optics Express, vol.16, no.2, January 2008]. The results published to date show that both the options of linear equalization allow the linear effects resulting from the signal propagation in the fiber to be mitigated with high-accuracy [J. Renaudier, G. Charlet, M. Salsi, O. B. Pardo, H. Mardoyan, P. Tran, and S. Bigo, "Linear Fiber Impairments Mitigation of 40-Gbit/s Polarization-Multiplexed QPSK by Digital Processing in a Coherent Receiver", IEEE Journal of Lightwave Technology, vol.26, no.1, January 2008].

The linear digital equalization enables the dispersion compensation fibers (DCF) to be removed from the optical system. High penalty in the optical signal-to-noise ratio (OSNR) is therefore avoided, as well as additional non-linear effects which are associated to the use of DCFs. Moreover, the use of digital equalization after detection of the optical signal will provide the system with a high degree of adaptability to the propagation scenario.

### 2. Digital Backward Propagation

After a well succeeded equalization of linear effects, the non-linear effects and their interaction with noise represent the new barrier in signal detection. The Nonlinear Phase Noise (NLPN) phenomenon results from the interaction between the Kerr effect and the spontaneous emission noise (ASE - Amplified Spontaneous Emission) which is generated by optical amplifiers. This effect is particularly relevant as regards optical signals with phase modulation. A method for digital post-compensation which allows the adverse effect of NLPN to be reduced is proposed in [K. P.- Ho and J. M. Kahn, "Electronic Compensation Technique to Compensate Nonlinear Phase Noise," IEEE Journal of Lightwave Technology, vol. 22, no. 3, pp. 779-783, 2004]. However, this method for non-linear compensation is not able to correctly modulate the interaction between the chromatic dispersion and non-linear effects, thus restricting its practical application in the scope of optical communication systems.
Due to its strong correlation with linear distortions, the non-linear equalization is generally used with channel inversion techniques, this process being commonly referred to as Digital Backward Propagation (DBP). These techniques are based on the solution of the non-linear Schrödinger equation, in its reverse spatial evolution, thus describing the optical signal propagation in the fiber reverse direction (from the receiver to the transmitter).

The first works to use the DBP concept in optical communications were based in digital pre-compensation, concentrated in the transmitter, in order to improve the performance of direct detection systems [K. Roberts, C. Li, L. Strawczynski, M. O'Sullivan, and I. Hardcastle, "Electronic Precompensation of Optical Nonlinearity," IEEE Photonics Technology Letters, vol. 18, no. 2, pp. 403-405, 2006]. However, with the arrival of coherent detection systems, the DBP techniques are preferably implemented on the receiver. In 2008, the DBP was proposed for the first time as a method for post-compensation of the optical channel, which can be applied to single-channel (SC) systems [E. Ip and J. M. Kahn, "Compensation of dispersion and nonlinear impairments using digital backpropagation," IEEE Journal of Lightwave Technology, vol. 26, no. 20, pp. 3416-3425, 2008], or to WDM systems [X. Li et al., "Electronic post-compensation of WDM transmission impairments using coherent detection and digital signal processing," Optics Express, vol. 16, no. 2, pp. 880-888, 2008]. More recently, DBP techniques were generally extended to polarization-multiplexed systems [E. Ip, "Nonlinear Compensation Using Backpropagation for Polarization-Multiplexed Transmission," IEEE/OSA Journal of Lightwave Technology, vol. 28, no. 6, pp. 939-951, 2010]. The numerical implementation of this technique is based on the iterative application of the split-step Fourier (SSF) method, wherein the linear and non-linear operators are separately applied over a short distance. The application of the SSF method to describe the DBP is usually referred to as BP-SSF (Backward Propagation Split-Step Fourier). If the time and space resolution used in the application of BP-SSF is sufficiently high, an effective compensation is obtained with high accuracy for all the deterministic distortions in the fiber. The simulation results published in [E. Ip and J. M. Kahn, "Compensation of dispersion and nonlinear impairments using digital backpropagation," IEEE Journal of Lightwave Technology, vol. 26, no. 20, pp. 3416-3425, 2008] show that the application of the BP-SSF allows the range of a RZ-QPSK channel modulated at 21.4 Gb/s to be increased from 2000 km (by applying the linear equalization only) to more than 6400 km. However, the compensation high performance is obtained thanks to a major computational effort. Because of this, the practical implementation of non-linear equalization requires a compromise to be adopted between performance and numerical complexity. Another relevant disadvantage of the BP-SSF method lies in the impossibility to apply the linear and non-linear operators separately, which seriously impairs the equalization modularity.

### 3. Non-Linear Equalization with Volterra Series

The Volterra series polynomial expansion is a powerful tool for the analysis of time-invariant non-linear systems. In fact, an optical communication system can be considered as a time-invariant non-linear system, thus becoming a potential target for analysis with Volterra series. In 1997, K. Peddanarappagari and M. Brandt-Pearce, have proposed for the first time a Volterra series expansion intended to solve the non-linear Schrödinger equation in single-mode fibers [K. Peddanarappagari and M. Brandt-Pearce, "Volterra Series Transfer Function of Single-Mode Fibers," IEEE Journal of Lightwave Technology, vol, 15, no. 12, pp. 2232-2241, December 1997]. The said authors have thus obtained a closed transfer function of optical fiber in the frequency domain, which is commonly known in the scope of optical communications as Volterra Series Transfer Function (VSTF). However, this transfer function describes the signal propagation exclusively in the direct direction of the fiber, serving the sole purpose of simulation and analysis of optical pulses propagation as an alternative method to the conventional SSF. Considering its unique potential in what concerns the analysis of non-linear effects resulting from propagation, the interest in VSTF has recently re-emerged associated to the quality analysis of the signal in coherent optical systems with dense wavelength multiplexing, wherein non-linearity effects are determining [J. D. Reis and A. L. Teixeira, "Unveiling Nonlinear Effects in Dense Coherent Optical WDM Systems with Volterra Series," Optics Express, vol. 18, no. 8, pp. 8660-8670, 2010].

The first applications of Volterra series for the purpose of equalization are also related to direct detection systems, in which the application of Volterra terms has allowed the conventional linear equalizers to be redesigned so as to embrace the non-linear effect produced by the photodetector in the signal transduction into the electrical domain [C. Xia and W. Rosenkranz, "Nonlinear Electrical Equalization for Different Modulation Formats With Optical Filtering," Journal of Lightwave Technology, vol. 25, no. 4, pp. 996-1001, 2007; X. Zhu, S. Kumar, S. Raghavan, Y. Mauro, and S. Lobanov, "Nonlinear Electronic Dispersion Compensation Techniques for Fiber-Optic Communication Systems," in OFC/NFOEC, 2008]. However, these non-linear equalization strategies only intend to reduce the impact of the photodiode detection square-law in the subsequent linear equalization, since the effective equalization of non-linear effects resulting from the signal propagation is not allowed. More recently, in the context of optical systems with coherent detection, some proposals have been presented for non-linear equalization based in Volterra series expansions in the time domain [Y. Gao, F. Zgang, L. Dou, Z. Chen, and A. Xu, "Intra-channel Nonlinearities Mitigation in Pseudo-Linear Coherent QPSK Transmission Systems via Nonlinear Electrical Equalizer," Optics Communications, vol. 282, pp. 2421-2425, 2009; F. Zhang, Y. Gao, Y. Luo, J. Li, L. Zhu, L. Li, Z. Chen, and A. Xu, "Experimental Demonstration of Intra-Channel Nonlinearity Mitigation in Coherent QPSK Systems with Nonlinear Electrical Equaliser," IEEE Electronics Letters, vol. 46, no. 5, pp. 353-355, 2010]. Currently available works show that the application of a Volterra non-linear equalizer with a sufficiently high number of stages can lead to an equalization performance which is similar to the one of BP-SSF with only one step per fiber span. However, it is mentioned that this technique requires a higher number of operations than that of BP-SSF in at least an order of magnitude. Additionally, the absence of an analytical description as regards Volterra nuclei requires the adoption of adaptive optimization techniques based in training bits sequences. Therefore, the equalizer convergence process can be too lengthy and unstable.

The non-linear equalization technique herein disclosed is distinct from the remaining techniques based in Volterra series, because it is entirely formulated and executed in the frequency domain. Moreover, the proposed technique has the singularity of being based in closed and fully determined expressions regarding a particular known optical connection. However, individual optimization of the equalizer's input parameters is also possible, thus making it applicable to optical systems whose parameters are unknown /uncertain and/or time-variant.

### Summary of the Invention

This invention relates to the application of a new method for digital equalization, which is based on an inverse Volterra series transfer function, intended for mitigation of signal distortions within optical communication systems.

Optical fibers can be rigorously modulated through the Non-linear Schrödinger Equation (NLSE). Being an analytical model of a time-invariant non-linear system, NLSE can be described by means of a Volterra series expansion, thus allowing an optical fiber transfer function to be obtained [K. Peddanarappagari and M. Brandt-Pearce: Volterra Series Transfer Function of Single-Mode Fibers, IEEE Journal of Lightwave Technology, vol. 15, no. 12, December 1997]. This Volterra Series Transfer Function (VSTF) allows to numerically solve the NLSE with an accuracy similar to that of the conventional split-step Fourier method, if the optical power in the fiber is kept under a given threshold value.

For the purposes of linear and non-linear equalization of the optical signal, an analytical method is commonly adopted which is based in spatial inversion of NLSE. From the inverse NLSE, a Volterra series expansion was derived which describes the backward propagation of the signal (BP-VSTF - Backward Propagation Volterra Series Transfer Function).

From the analytical expression of BP-VSTF, it is possible to obtain closed numerical descriptions as regards the third and fifth order non-linear digital equalizers. Due to the high complexity of the fifth order term (and subsequent terms), only the third order equalizer has an immediate practical application. This non-linear equalizer in the frequency domain based in Volterra series (FD-VSNE - Frequency Domain Volterra Series Nonlinear Equalizer) provides a non-iterative algorithm so that the non-linear equalization of the optical signal is carried out. If duly optimized, this algorithm of non-linear equalization can drastically reduce the computational effort which is inherent to digital post-compensation of the optical signal, thus allowing the currently proposed iterative methods to be replaced.

### Description of the Figures

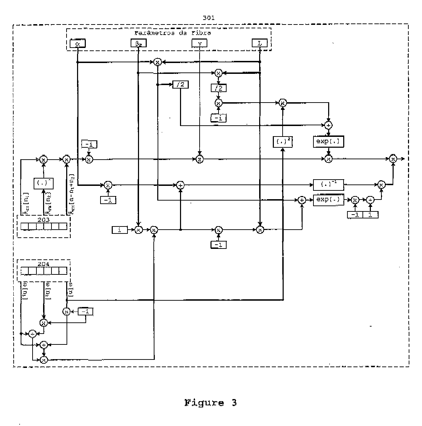

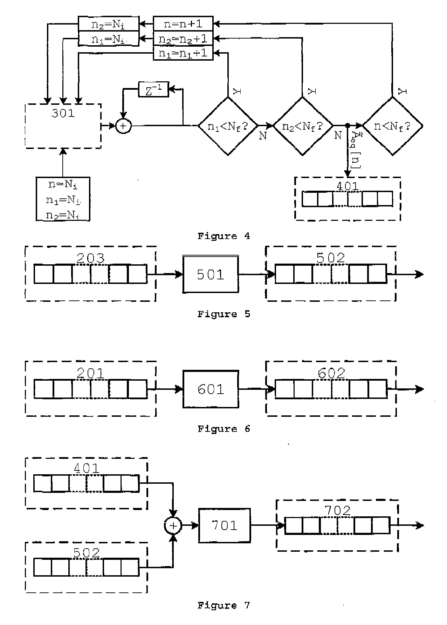

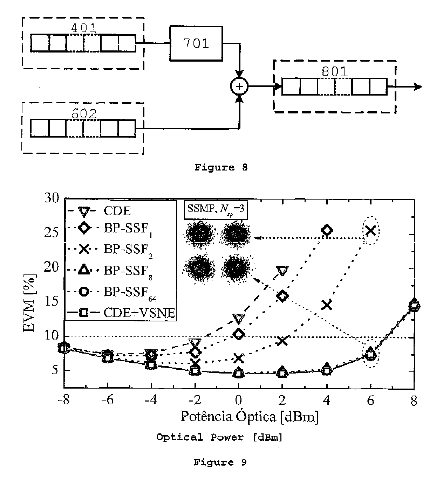

The following description is based on the enclosed figures in which:

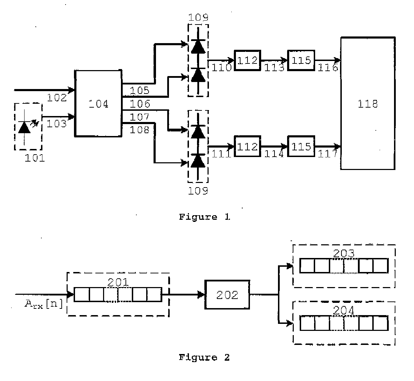

**Figure 1:** Figure 1 illustrates a typical structure of a coherent detection receiver required for the implementation of the non-linear equalization technique. The whole process of equalization herein patented is executed in the digital signal processing block (118).
   **Reference signals of** **Figure 1****:**
   101 - local oscillating laser
   102 - optical field of the received signal
   103 - optical field of the local oscillating laser
   104 - 90° optical hybrid (2x4)
   105 - optical field of the in-phase component of the received signal
   106 - optical field of the in-phase component of the received signal (symmetric of 105)
   107 - optical field of the in-quadrature component of the received signal
   108 - optical field of the in-quadrature component of the received signal (symmetric of 107)
   109 - pair of photodiodes in balanced configuration
   110 - electrical field of the in-phase component of the received signal
   111 - electrical field of the in-quadrature component of the received signal
   112 - low-pass electrical filter
   113 - electrical field of the in-phase component of the received signal after low-pass filtering
   114 - electrical field of the in-quadrature component of the received signal after low-pass filtering
   115 - analog-to-digital conversion unit
   116 - digital representation of the in-phase component of the received signal
   117 - digital representation of the in-quadrature component of the received signal
   118 - digital signal processing unit
**Figure 2:** Figure 2 schematically illustrates the transformation process of the samples of received signals from the time domain to the frequency domain, by applying a discrete Fourier transform.
   **Reference signals of** **Figure 2****:**
   Arx[n] - sample number n of the complex digital signal of which the real part corresponds to signal 116 and the imaginary part corresponds to signal 117
   201 - adjustable-size buffer for storing the samples of the received signal
   202 - fast-Fourier transform
   203 - vector with samples of the received signal in the frequency domain
   204 - vector of angular frequencies associated to 203
   **Figure 3:** Figure 3 illustrates the internal structure of the Volterra non-linear equalizer operating in the frequency domain. The block of operations herein presented enables the implementation of each portion of the inverse transfer function, which represents the non-linear contribution of the optical system.
   **Reference signals of** **Figure 3****:**
   Ãᵣₓ[n₁] - sample in position n₁ of vector 203
   Ãᵣₓ[n₂] - sample in position n₂ of vector 203
   Ãᵣₓ[n-n₁+n_{2]} - sample in position n-n₁+n₂ of vector 203 ω[n₁] - angular frequency value in position n₁ of vector 204
   ω[n₂] - angular frequency value in position n₂ of vector 204
   ω[n] - angular frequency value in position n of vector 204
   (.)* - complex conjugate operation of a complex value
   x - operation of multiplication
   + - operation of addition
   /2 - operation of division by 2
   (.)² - operation of squaring
   exp(.) - base exponential operation and
   (.)⁻¹ - complex number inversion / raised to -1 i - imaginary unit
   -i - symmetric of imaginary unit
   1 - real value 1
   -1 - real value -1
   α - attenuation coefficient of the fiber
   β₂ - group velocity dispersion coefficient of the optical signal
   γ - fiber non-linear coefficient, which is responsible for the Kerr effect
   L - length of fiber span
   301 - operational structure implementing each portion of the non-linear equalizer
**Figure 4:** Figure 4 shows a block diagram illustrating the required sequence of operations in order to implement the equalization of a block of samples from the received signal.
   **Reference signals of** **Figure 4****:**
   Nᵢ - initial value for indices n, n₁ and n₂
   N_{f} - final value for indices n, n₁ and n₂
   z⁻¹ - time delay corresponding to the period of a sample
   Y - yes
   N - no
   401 - vector with samples of the signal after non-linear equalization
**Figure 5:** Figure 5 schematically illustrates a possible process for the linear equalization of the optical signal in the frequency domain.
   **Reference signals of** **Figure 5****:**
   501 - algorithm for linear equalization of the optical signal in the frequency domain
   502 - vector with samples of the received signal after linear equalization in the frequency domain
**Figure 6:** Figure 6 schematically illustrates a possible process for the linear equalization of the optical signal in the time domain.
   **Reference signals of** **Figure 6****:**
   601 - algorithm for linear equalization of the optical signal in the time domain
   602 - vector with samples of the received signal after linear equalization in the time domain
**Figure 7:** Figure 7 illustrates the process for reconstruction of the equalized signal based on its components resulting from linear and non-linear equalization, both in the frequency domain. It also illustrates the subsequent transformation into the time domain by means of an inverse Fourier transform.
   **Reference signals of** **Figure 7****:**
   701 - inverse fast-Fourier transform
   702 - vector with samples from the received signal in the time domain after linear and non-linear equalization
**Figure 8:** Figure 8 illustrates the process for reconstruction of the equalized signal based on its components resulting from linear equalization in the time domain and from non-linear equalization in the frequency domain. It also illustrates the transformation of the non-linear component into the time domain by means of an inverse Fourier transform.
   **Reference signals of** **Figure 8****:**
   801 - the same as 702
**Figure 9:** Figure 9 shows a graphic with the evolution of the EVM according to the input optical power after digital equalization. It presents the results as regards the following equalization methods: frequency-domain chromatic dispersion equalizer (CDE), BP-SSF with **1** step per fiber span, BP-SSF with 2 steps per fiber span, BP-SSF with 8 steps per fiber span, BP-SSF with 64 steps per fiber span and joint application of the CDE and Volterra Series Non-linear Equalizer (CDE+VSNE). Three samples per symbol are used in order to perform equalization.

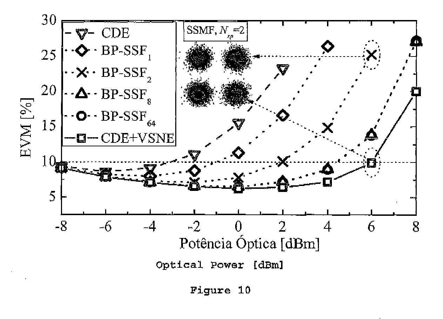

**Figure 10:** Figure 10 shows a graphic with the evolution of the EVM according to the input optical power after digital equalization. It presents the results as regards the following equalization methods: frequency-domain chromatic dispersion equalizer (CDE), BP-SSF with 1 step per fiber span, BP-SSF with 2 steps per fiber span, BP-SSF with 8 steps per fiber span, BP-SSF with 64 steps per fiber span and joint application of the CDE and the Volterra Series Non-linear Equalizer (CDE+VSNE). Two samples per symbol are used in order to perform equalization.

### Detailed Description of the Invention

The method for nonlinear equalization as disclosed by this invention imposes the transduction of the optical signal into the electrical domain without loss of the phase information. Accordingly, the equalization with FD-VSNE requires optical coherent detection to be adopted, which is not compatible with direct detection receivers. Figure 1 shows an illustrative scheme of a coherent detection receiver which is required for execution of the equalization method. The optical signal received (102) is mixed with the signal from a local oscillating laser (103) in a 90 degrees optical hybrid (104), giving rise to the in-phase (105/106) and in-quadrature (107/108) components which are converted into the electrical domain by means of 2 pairs of photodiodes in balanced configuration (109). In the electrical domain, the signal components are applied to low-pass filters (112) and then sampled at a given rate in Analog-to-Digital Conversion devices (ADC) (115). Finally, the digital signal is fed into a Digital Signal Processor (DSP) (118). The non-linear digital equalization method disclosed by this invention is to be implemented on the DSP.

According to Figure 1, the samples of the received signal are fed into the signal processing unit with a time interval which will be determined by the inverse of the sampling rate applied to the ABC (115). Since the herein proposed equalization method is fully applied in the frequency domain, an algorithm is required so that the digital signal Fourier transform can be performed, with a view to prepare the signal for the equalization process. The algorithm which is currently the most advantageous in order to comply with this requirement is the fast-Fourier transform (FFT), whose complexity evolves logarithmically with the number of samples of the block to be processed. Figure 2 shows a basic scheme of the discrete Fourier transform which is required previously to the equalization. The samples of the received signal (Aᵣₓ[n]) are stored in an adjustable-size buffer (201) and then fed in block into the algorithm FFT (202), so that a new sample block in the frequency domain (203) and a vector with the relevant angular frequencies (204) are obtained. This sample block is now ready to be equalized.

Figure 3 schematically illustrates the block of operations required in order to implement each portion of the non-linear equalizer. The vectors with the samples from the received signal (203) and with the relevant angular frequencies (204) are sequentially processed according to the previously defined operations. In addition to these vectors, the equalizer's input data also include some essential parameters of the optical fiber through which the signal propagation has occurred: the attenuation coefficient, α (km⁻¹), the signal's group velocity dispersion coefficient, β₂ (s²/km), the fiber non-linear coefficient, γ (W⁻¹km⁻¹), and the fiber length, L (km). However, it shall be mentioned that, when at the output of (301), the sample is not yet equalized, since only a part of the equalization has been calculated. From another point of view, one can say that the structure of Figure **3** still does not provide the system with the memory effect which is required for the purpose of non-linear equalization.

To that end, i.e. entering memory into the equalization system, Figure **4** shows the block diagram implementing the full equalization of a block of samples from the received signal (203). The indices n, n₁ and n₂ are initialized with the value Nᵢ. Subsequently, the processing block (301) which determines a preliminary value of the equalized sample is implemented. The said value is stored and the index n₁ is updated and fed into (301), wherein a new processing takes place with the current value of n₁. The sample produced by (301) is then added to the previous value and the result is stored during another processing cycle. This process is repeated until the index n₁ reaches the preset value of N_{f}, At that moment, the obtained sample is stored, the index n₂ is updated and the index n₁ is reset to the value of Nᵢ. With the new values of n₁ and n₂, the processing block (301) is again activated, thus producing a new sample. From that point on, the herein described process is repeated, going through the values from n₁ and n₂ to N_{f}. When the index n2 reaches the value of N_{f}, it is finally obtained the equalized sample n=Nᵢ. This sample can then be stored in the output block along with the equalized samples (401), in position Nᵢ. In order to obtain the remaining samples N_{f}-Nᵢ of the equalized signal, it will be enough to update the value of n, reset n₁ and n₂ with the value of Nᵢ and repeat the aforementioned process N_{f}-Nᵢ times. Finally, when the value of n reaches N_{f}, the equalization of the current block of samples is completed and the block can be fed into the subsequent processing functions which will be hereunder described. The values of Nᵢ and N_{f} shall be previously established by the user but always complying with the condition Nᵢ<n-n₁+n₂<N_{f}, as regards all the values of n, n₁ and n₂. Therefore, the access to invalid indices is prevented during the algorithm execution. With the preset Nᵢ and N_{f}, the user can also control the compromise between the performance and the computational effort of the equalizer. At the beginning of this process, the storage unit (z⁻¹) is initialized with the value 0.

After execution of the number of operations defined by Figures **3** and **4****,** the block (401) contains the samples in the frequency domain with the completed non-linear equalization. However, the signal is still not free from linear distortions, since no equalization of the linear effects (chromatic dispersion) has been applied. Even though, and as already mentioned above, there are currently several methods for linear equalization of the optical field which can be used to that purpose. Figure 5 illustrates, merely as an example, the linear equalization of the optical signal in the frequency domain. A block of samples from the received signal in the frequency domain (203) is linearly equalized by a given algorithm in (501), thus giving origin to the block of equalized samples in the frequency domain (502). Alternatively, linear equalization can also be performed in the time domain. By way of example, Figure **6** illustrates the linear equalization of the optical signal in the time domain. A block of samples from the received signal in the time domain (201) is linearly equalized by a given algorithm in (601), thus giving origin to the block of equalized samples in the time domain (602). Depending on which domain (time or frequency) the linear equalization method is applied, the reconstruction of the signal with linear and non-liner equalization can be adapted and performed accordingly. Figure **7** illustrates the reconstruction of the equalized signal from its linear and non-linear components, when the linear equalization has occurred in the frequency domain. The sample blocks with linear (502) and non-linear (401) equalization, both in the frequency domain, are added and fed into an Inverse Fast-Fourier Transform (IFFT) algorithm, which produces the equalized signal in the time domain. Alternatively, Figure **8** illustrates the same reconstruction of the signal, but in this case considering the non-linear equalization as having been made in the time domain. The sample block with non-linear equalization (401) is fed into an IFFT (701) and thus transposed into the time domain. After that, it is directly added to the sample block with linear equalization (602), giving origin to the final equalized signal in the time domain (801).

The equalized sample blocks in (702) and (801) include linear equalization (algorithm selected by the user) and non-linear equalization (the method for non-linear equalization as disclosed by this invention), thus allowing to retrieve the originally transmitted message through the received signal, after propagation in the fiber.

### Preferred Embodiment of the Invention

As an example, an implementation scenario is presented concerning the method for non-linear equalization herein proposed. Some simulation results, as well as their comparison with the main methods currently available for equalization, are also disclosed.
Let us consider the propagation of an optical signal being NRZ-QPSK modulated at a transmission rate of 40 Gbit/s. The propagation is performed over 20 sections of Standard Single Mode Fiber (SSMF) with 80 km length. The fiber parameters were defined according to a typical SSMF: α=0.2 dB/km; β₂=-20.4 ps²/km; γ=1.3 W⁻¹km⁻¹. Optical amplification is applied with an ideal gain coefficient and a 5 dB noise figure at the end of each fiber span. Intensity and phase noises of local transmitting and oscillating lasers were neglected. The 90 degree optical hybrid and the pair of balanced photodiodes are assumed to perform optical-to-electrical conversion without distorting the received signal. After coherent detection, the baseband signal is passed through a third-order low-pass Butterworth filter with cut-off frequency at 80% of the signal's symbol transmission rate. Finally, the received signal equalization is carried out by 3 distinct methods: a) only the linear equalization of chromatic dispersion in the frequency domain (FD-CDE - Frequency-Domain Chromatic Dispersion Equalization); b) linear and non-linear equalization with BP-SSF, applying a variable number of steps per fiber span; c) linear equalization in the frequency domain and non-linear equalization with the herein proposed Volterra series equalizer (CDE+VSNE).

In a first experiment, 3 samples per symbol are used for implementation of the equalization methods. The results obtained according to the optical power in the fiber are shown in Figure **9**. As a figure of merit for digital equalization performance, the defined Error Vector Magnitude (EVM) was used between the equalized signal and the transmitted signal.

The results shown in Figure **9** clearly indicate that the non-linear equalization method proposed by this invention allows a performance to be obtained which is similar to that achieved by the BP-SSF method with a high number of steps per fiber span (64).

Figure 10 shows the results for a similar scenario, wherein the number of samples per symbol was reduced to 2. In that particular case, one can observe that the CDE+VSNE equalization is even more effective than the best equalization with BP-SSF. This happens because the non-linear operator of BP-SSF is applied in the time domain, being subjected to aliasing phenomena due to the low temporal resolution which is associated to equalization. On its turn, equalization with VSNE is entirely implemented in the frequency domain, and this is the reason why it is more adequate to scenarios with a low sampling rate.

## Claims

1. A method for non-linear equalization of the optical channel in the frequency domain, in long range and high speed optical communication systems, **characterized in that**:
- the phase and amplitude data are extracted from the received optical signal;
- the signal components are digitized in analog-to-digital conversion devices;
- the digitized signal feeds a physical unit of digital signal processing.

2. A method according to claim 1, **characterized in that**:
- it is based in a Volterra series polynomial expansion in the frequency domain ;
- it has a closed form numerical description of the transfer function for equalization of the non-linear effects resulting from the signal propagation in the fiber.

3. A method according to claims 1 and 2, **characterized in that**:
- it is independent from the characteristics of the transmitted signal, namely of the modulation format and transmission rate;
- the equalizer's input parameters include the parameters of the optical fiber through which occurred the signal propagation: the attenuation coefficient, a (km⁻¹), the signal's group velocity dispersion coefficient, β2 (s²/km), the fiber non-linear coefficient, γ (W⁻¹km⁻¹), and the fiber length, L (km).

4. A method according to claims 1 to 3, **characterized in that**:
- it implements the digital equalization of the non-linear effects non-iteratively to each fiber section comprising the optical connection;
- it is entirely implemented in the frequency domain, thus avoiding an increase in numerical errors generated by time-frequency transition;
- it performs the equalization of third-order non-linear effects caused by the signal propagation in the fiber without refeeding and without any additional information charge for controlling or training the equalizer;
- it performs the independent equalization of linear and non-linear effects;
- it performs the parallel equalization of linear and non-linear distortions, adding the resulting output signals;
- it introduces non-linear equalization as a complementary module to the digital equalization subsystem,
whose performance and computational effort can be adjusted according to the system's requirements/capacities.
